# EUROPÄISCHE PATENTSCHRIFT

(11) **EP 3 317 126 B1**
(45) Veröffentlichungstag und Bekanntmachung des Hinweises auf die Patenterteilung: **26.06.2019**
(21) Anmeldenummer: 16706885.7
(22) Anmeldetag: 01.03.2016
(51) Int. Cl.: B60C 19/00, B60C 19/12

(54) **FAHRZEUGLUFTREIFEN MIT KLEBRIGEM DICHTMITTEL**
VEHICLE TIRE WITH ADHESIVE SEALING AGENT
PNEUMATIQUE DE VEHICULE AYANT UN AGENT D'ÉTANCHÉITÉ ADHÉSIF

(30) Priorität: 03.07.2015 DE 102015212488
(43) Veröffentlichungstag der Anmeldung: 09.05.2018
(73) Patentinhaber: Continental Reifen Deutschland GmbH, 30165 Hannover (DE)
(72) Erfinder: JACOB, Matthias, 04107 Leipzig (DE); SCHÜRMANN, Oliver, 30855 Langenhagen (DE)
(74) Vertreter: Finger, Karsten
(86) Internationale Anmeldenummer: PCT/EP2016/054260
(87) Internationale Veröffentlichungsnummer: WO 2017/005378

(56) Entgegenhaltungen:
- EP-A1- 2 006 125
- US-A1- 2003 150 544

## Beschreibung

Die Erfindung betrifft einen Fahrzeugluftreifen mit einem in seinem Inneren an der dem Laufstreifen gegenüberliegenden Innenfläche angeordneten, selbsttätig abdichtenden Dichtmittel, wobei das Dichtmittel hochviskos ist und wobei das Dichtmittel eine derartige Klebrigkeit aufweist, so dass es auf der Innenfläche haftet. Ein derartiger Fahrzeugluftreifen ist bereits aus der EP 2 006 125 A1 (Oberbegriff des Anspruchs 1) bekannt. Aus der US 2003/150544 A1 ist weiterhin ein selbstdichtender Fahrzeugluftreifen mit einer auf der Innenschicht von Schulter zu Schulter angeordneten bandartigen schwammartigen Schicht bekannt, welche mit einem Klebemittel imprägniert ist und mittels eines Klebestreifens an der Innenschicht angeordnet ist.

Fahrzeuglufreifen mit selbsttägig abdichtendem Dichtmittel sind dem Fachmann hinreichend bekannt. Das Dichtmittel ist im Reifeninneren an der Innenfläche in Projektion des Laufstreifens angeordnet. Das Dichtmittel weist eine derartige Viskosität und Klebrigkeit auf, so dass es nach Einbringen in den fertigen Reifen an diesem ortsfest haftet. Im Falle eines Durchstiches des Laufstreifens mit Auswurf des durchstechenden Gegenstandes fließt das Dichtmittel in den hinterbliebenen Kanal und dichtet diesen luftdicht ab.

Unter "hochviskos" ist hier ein Dichtmittel, dessen Viskosität mehr als 10 Pa·s beträgt, zu verstehen.

Problematisch ist nun, dass der fertig vulkanisierte Reifen produktionsbedingt an seiner Innenfläche sogenannten Haftverminderer aufweist. Dieser Haftverminderer ist während des Vulkanisationsprozesses von dem Innenbalg, welcher vollflächig mit Haftverminderer ausgestattet ist, auf die Innenfläche des Reifens übertragen worden. Da das Dichtmittel schlecht auf dem Haftverminderer haftet, ist es üblich, den Haftverminderer durch Reinigungsverfahren vollständig von der Innenfläche des Reifens zu entfernen. Durch diese Reinigung haftet das Dichtmittel gut an der Innenfläche des Reifens. Jedoch ist durch diese gute Haftung gleichzeitig die Fließfähigkeit des Dichtmittels herabgesetzt, was sich nachteilig im Dichtverhalten äußern kann. Um eine zuverlässige Dichtung zu gewährleisten, muss die Dichtschicht relativ dick mit etwa 7mm aufgebracht werden.

Es ist daher die Aufgabe der Erfindung, einen Fahrzeugluftreifen mit Dichtmittel in seinem Inneren an der dem Laufstreifen gegenüberliegenden Innenfläche bereitzustellen, der bei Laufstreifendurchstichen zuverlässig selbsttätig dichtet.

Die Aufgabe wird gelöst, indem die Innenfläche des Reifens, auf welcher das Dichtmittel angeordnet ist, haftvermindernd ausgestattete Bereiche aufweist, wobei diese haftvermindernd ausgestatteten Bereiche zwischen 20% und 80% der Innenfläche, auf der das Dichtmittel angeordnet ist, einnehmen.

Die Innenfläche, auf der das Dichtmittel angeordnet ist, weist Bereiche auf, die haftvermindernd und die nicht haftvermindernd ausgestattet sind. Der Anteil dieser haftvermindern ausgestatteten Bereiche beträgt zwischen 20% und 80%. Die nicht haftvermindernd ausgestatteten Bereiche sind für die zuverlässige Klebkraft des Dichtmittels an der Innenfläche zuständig. Durch die haftvermindernd ausgestatteten Bereiche ist die Fließfähigkeit des Dichtmittels und somit die Abdichtung bei Durchstichen verbessert.

Vorteilhaft ist es, wenn die haftvermindernd ausgestatteten Bereiche über den Umfang des Reifens gleichmäßig verteilt angeordnet sind. Hierdurch ist die Klebkraft als auch die Abdichtung über den Reifenumfang ausgewogen und zuverlässig erhalten.

Zweckmäßig ist es, wenn die haftvermindernd ausgestatteten Bereiche die Struktur eines Netzes oder Gitters oder eine Streifenstruktur oder eine geometrische 2-dimensionale Struktur, wie aus Kreisen oder Polygonen, aufweist. Hierdurch ist die beste Balance zwischen Haftung und Fließfähigkeit des Dichtmittels erreicht. Zufällige, unerwünschte Ablösungen des Dichtmittels sind vermieden.

Zweckmäßig ist es, wenn die haftvermindernd ausgestatteten Bereiche zwischen 30% und 60%, vorzugsweise etwa 50% derjenigen Innenfläche, auf der das Dichtmittel angeordnet ist, einnehmen.

In einer bestimmten Ausführung der Erfindung ist radial innen auf dem Dichtmittel ein Schallabsorber angeordnet, welcher aufgrund der Klebrigkeit des Dichtmittels an diesem haftet. Es wird ein zur selbsttätigen Abdichtung vorgesehenes Dichtmittel gleichzeitig als "Haftmittel" zum Befestigen eines Schallabsorber, vorzugsweise eines schallabsorbierenden Schaumstoffringes verwendet. Es hat sich gezeigt, dass ein auf dem Dichtmittel aufliegender Schallabsorber die Fließfähigkeit des Dichtmittels nachteilig beeinflussen kann. Durch die haftverminderten Bereiche ist das Fließverhalten des Dichtmittels trotz des aufliegenden Schallabsorbers verbessert.

Um die Fließfähigkeit des Dichtmittels bei einem auf dem Dichtmittel anhalftendem Schallabsorber weiterhin zu verbessern, weist die Kontaktfläche zwischen dem Schallabsorber und dem Dichtmittel Bereiche auf, die haftvermindernd ausgestattet sind, wobei diese haftvermindernd ausgestatteten Bereiche zwischen 30% und 90% der Kontaktfläche einnehmen. Sowohl die Fläche zwischen Innenfläche und Dichtmittel als auch die Fläche zwischen Schallabsorber und Dichtmittel weist haftvermindernd ausgestattete Bereiche auf, wodurch ein optimales Fließverhalten des Dichtmittels bei Durchstichen erhalten ist. Die haftvermindernd ausgestatteten Bereiche können in Bezug auf den Flächenanteil zwischen dem Schallabsorber und dem Dichtmittel und den Flächenanteil zwischen Innenschicht und Dichtmittel gleich groß oder unterschiedlich groß sein.

Es ist zweckmäßig, die haftvermindernd ausgestatteten Bereiche der Kontaktfläche zwischen Schallabsorber und dem Dichtmittel und zwischen der Innenfläche und dem Dichtmittel versetzt zueinander anzuordnen, um möglichst geringe Deckungsgleichheit -in Projektion in radialer Richtung - zu erhalten. Hierdurch ist ein sehr guter Dichtmittelfluß erhalten.

Im Rahmen der Erfindung kommen sämtliche Dichtmittel in Frage, die selbsttätig abdichten und zumindest unmittelbar nach dem Aufbringen auf die innere Oberfläche des Reifens soweit klebrig sind, dass der Schaumstoffring angepresst und derart haftend mit dem Dichtmittel verbunden werden kann. Es eignen sich daher beispielsweise Dichtmittel auf Basis von Polyurethan oder Dichtmittel, welche eines viskose Mischung auf Basis eines Butylkautschukes, eines Polybutens oder auf Basis von Silikon sind.

Durch die verbesserte Fließfähigkeit kann die Schichtdicke des Dichtmittel stark reduziert werden, was vorteilhaft in Bezug auf die Gestehungskosten des Reifens als auch in Bezug das Reifengewicht ist. Die Reduktion der Schichtdicke des Dichtmittel in Bezug auf Reifen des Standes der Technik beträgt etwa 50%.
Bei Anordnung des Dichtmittels mit Schallabsorber beträgt die Schichtdicke des Dichtmittels nur 2,5 mm bis 3,5 mm, vorzugsweise etwa 3 mm. Bei Reifen ohne haftvermindernd ausgestaltete Bereiche beträgt die Schichtdicke etwa 7,5 mm.

Bevorzugt weist der Schallabsorber ein Volumen von 0,5 % bis 50 % in Bezug auf das Volumen des mit einer Felge gebildeten Reifeninnenraumes auf.

Weitere Merkmale, Vorteile und Einzelheiten der Erfindung werden nun anhand der Zeichnungen, die schematische Ausführungsbeispiele darstellen, näher beschrieben. Dabei zeigt die
Fig. 1 einen Querschnitt durch einen Fahrzeugluftreifen mit Dichtmittelschicht und Schallabsorber;
Fig. 2 einen vergrößerten Ausschnitt aus der Fig. 1.

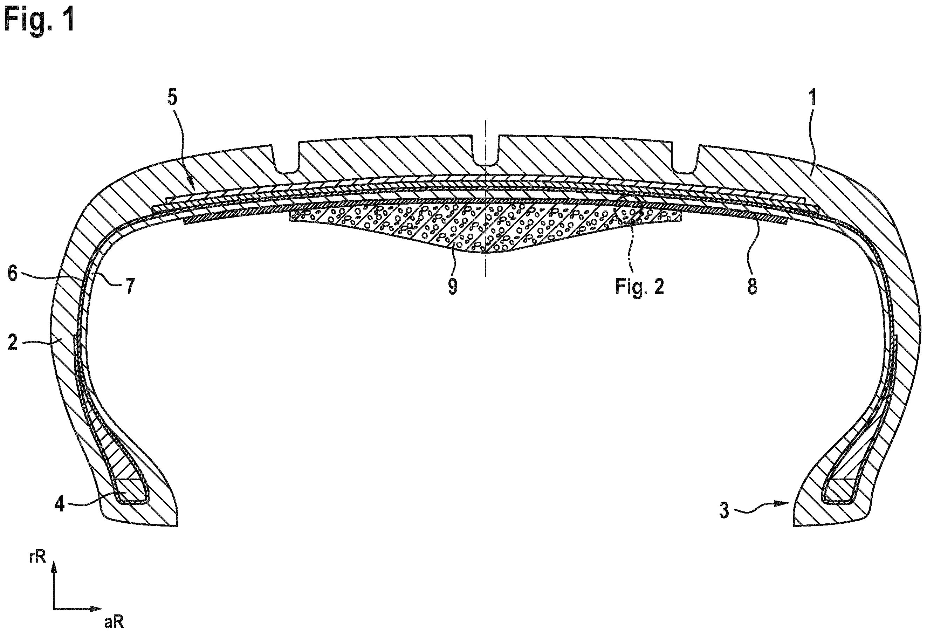

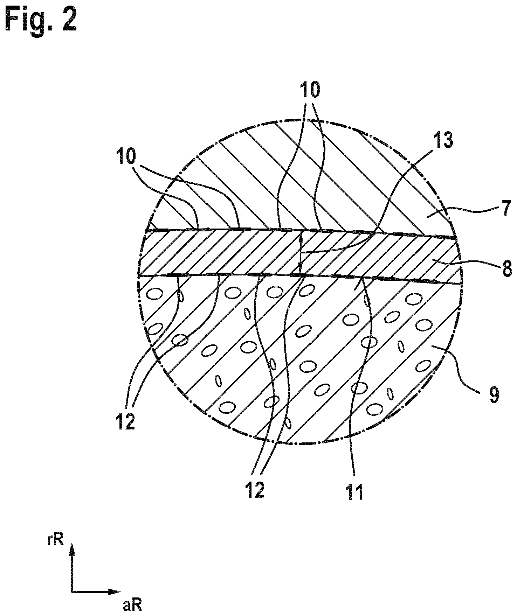

Die Fig.1 und die Fig. 2 werden nachfolgend gemeinsam beschrieben.

In Fig. 1 ist ein Querschnitt durch einen PKW-Radialreifen dargestellt, welcher einen profilierten Laufstreifen 1, Seitenwände 2, Wulstbereiche 3, Wulstkerne 4 sowie einen mehrlagigen Gürtelverband 5 und einer Karkasseinlage 6 aufweist. An seiner inneren Fläche ist der Reifen mit einer Innenschicht 7 aus einer luftdicht ausgeführten Gummimischung bedeckt.

An der dem Laufstreifen 1 gegenüberliegenden inneren Oberfläche der Innenschicht 7 ist nachträglich (bei fertigem Reifen) ein Dichtmittel 8 aufgebracht, welches in der Lage ist, sich bei Durchstich - Beschädigung des Reifens selbstabdichtend zu verhalten. Am Dichtmittel 8 haftet ein schallabsorbierender Schaumstoffring 9, welcher unmittelbar nach dem Aufbringen des Dichtmittels 8, solange dieses noch ausreichend klebrig ist, auf das Dichtmittel 8 aufgepresst wird, wie nachfolgend beschrieben wird. Der schallabsorbierende Schaumstoffring 9 ist bezüglich seiner schallabsorbierenden Eigenschaften auf die Reifenhohlraumfrequenz abgestimmt.

Der Schaumstoffring 9 weist beispielsweise den in Fig. 1 gezeigten etwa langgestreckt dreieckförmigen, bezüglich des Reifenäquators symmetrischen Querschnitt auf. Der Schaumstoffring 9 wird ferner derart ausgeführt, dass sein Volumen zwischen 0,5 % und 50 % des Volumens des Reifeninnenraumes, gebildet durch den auf eine Felge aufgebrachten Reifen, einnimmt. Als Dichtmittel kommen beispielsweise Polyurethan-Gele oder viskose Mischungen auf Basis von Butylkautschuken, Polybutenen oder Silikon in Frage, wobei die Mischungen die üblichen weiteren Bestandteile, wie Weichmacheröle, enthalten können. Das Dichtmittel wird, beispielsweise durch Aufsprühen, derart eingebracht, dass es zumindest die dem Laufstreifen 1 gegenüberliegende innere Oberfläche bedeckt. Zur optimalen Verteilung des Dichtmittels an der Innenfläche kann der Reifen in Rotation versetzt werden. Das Dichtmittel wird eingebracht. Zumindest unmittelbar nach dem Aufbringen soll das Dichtmittel relativ flüssig und klebrig sein. Zu diesem Zeitpunkt wird der vorgefertigte Schaumstoffring 9 in das Innere des Reifens eingebracht und angedrückt. Nach dem Ausreagieren haftet der Schaumstoffring 9 an dem elastisch deformierbaren, aber ortsfest verbleibenden Dichtmittel 8.

Die Innenfläche, hier die Innenschicht 7, auf der die Dichtmittellage 8 angeordnet ist, weist haftvermindernd ausgestattete Bereiche 10 auf. Diese haftvermindernd ausgestatteten Bereiche 10 nehmen zwischen 40% und 60% der Innenschicht 7 ein, auf welcher das Dichtmittel angeordnet ist. Der Haftverminderer ist im Vulkanisierprozess vom Innenbalg (nicht dargestellt) auf die Innenschicht 7 übertragen. Durch mechanische Verfahren oder durch den Einsatz eines Lasers wird dieser Haftverminderer von der Innenschicht 7 teilweise entfernt, wodurch gut haftende Bereiche neben haftvermindernd ausgestatteten Bereichen zwischen Innenschicht 7 und Dichtmittel 8 erhalten werden. Diese haftvermindernd ausgestatteten Bereiche 10 sind über den Umfang des Reifens gleichmäßig verteilt angeordnet und nehmen etwa 50% derjenigen Innenfläche, auf der das Dichtmittel 8 angeordnet vorzugsweise in Struktur eines Netzes oder Gitters, ein. Zusätzlich weist auch die Kontaktfläche 11 zwischen dem Schallabsorber 9 und dem Dichtmittel 8 Bereiche 12 auf die haftvermindernd ausgestattet sind. Diese haftvermindernd ausgestatteten Bereiche 12 nehmen zwischen 40% und 60% der Kontaktfläche 11 ein. Dabei sind die haftvermindernd ausgestatteten Bereiche 12 und die haftvermindernd ausgestatteten Bereiche 10 versetzt zueinander angeordnet, um eine möglichst geringe Deckungsgleichheit -in Projektion in radialer Richtung - aufzuweisen. Die Schichtdicke 13 des Dichtmittels 8 beträgt 2,5 mm bis 3,5 mm, vorzugsweise etwa 3 mm.

### Bezugszeichenliste

1 .........Laufstreifen
2 .........Seitenwände
3 .........Wulstbereiche
4 .........Wulstkerne
5 .........Gürtelverband
6 .........Karkasseinlage
7 .........Innenschicht
8 .........Dichtmittellage
9 .........schallabsorbierender Schaumstoffring
10 .......haftvermindernd ausgestatteter Bereich
11 .......Kontaktfläche
12 .......haftvermindernd ausgestatteter Bereich
13 .......Schichtdicke der Dichtmittellage

## Patentansprüche

1. Fahrzeugluftreifen mit einem in seinem Inneren an der dem Laufstreifen (1) gegenüberliegenden Innenfläche (7) angeordneten, selbsttätig abdichtenden Dichtmittel (8), wobei das Dichtmittel (8) hochviskos ist und wobei das Dichtmittel (8) eine derartige Klebrigkeit aufweist, so dass es auf der Innenfläche (7) haftet,
**dadurch gekennzeichnet,**
**dass** die Innenfläche (7), auf der das Dichtmittel (8) angeordnet ist, haftvermindernd ausgestattete Bereiche (10) aufweist, wobei diese haftvermindernd ausgestatteten Bereiche (10) zwischen 20% und 80% der Innenfläche (7), auf der das Dichtmittel (8) angeordnet ist, einnehmen.

2. Fahrzeugluftreifen nach Anspruch 1, **dadurch gekennzeichnet, dass** die haftvermindernd ausgestatteten Bereiche (10) über den Umfang des Reifens gleichmäßig verteilt angeordnet sind.

3. Fahrzeugluftreifen nach Anspruch 1 oder 2, **dadurch gekennzeichnet, dass** die haftvermindernd ausgestatteten Bereiche (10) die Struktur eines Netzes oder Gitters oder eine Streifenstruktur oder eine geometrische 2-dimensionale Struktur, wie aus Kreisen oder Polygonen, aufweist.

4. Fahrzeugluftreifen nach einem oder mehreren der vorangehenden Ansprüchen, **dadurch gekennzeichnet, dass** die haftvermindernd ausgestatteten Bereiche (10) zwischen 30% und 60%, vorzugsweise etwa 50% derjenigen Innenfläche, auf der das Dichtmittel (8) angeordnet ist, einnehmen.

5. Fahrzeugluftreifen nach einem oder mehreren der vorangehenden Ansprüchen, **dadurch gekennzeichnet, dass** radial innen auf dem Dichtmittel (8) ein Schallabsorber (9) angeordnet ist, welcher aufgrund der Klebrigkeit des Dichtmittels (8) an diesem haftet.

6. Fahrzeugluftreifen nach Anspruch 5, **dadurch gekennzeichnet, dass** die Kontaktfläche (11) zwischen dem Schallabsorber (9) und dem Dichtmittel (8) Bereiche (12) aufweist, die haftvermindernd ausgestattet sind, wobei diese haftvermindernd ausgestatteten Bereiche (12) zwischen 30% und 90% der Kontaktfläche (11) einnehmen.

7. Fahrzeugluftreifen nach Anspruch 6, **dadurch gekennzeichnet, dass** die haftvermindernd ausgestatteten Bereiche (12) der Kontaktfläche (11) zwischen Schallabsorber (9) und dem Dichtmittel (8) und zwischen der Innenfläche (7) und dem Dichtmittel (8) versetzt zueinander angeordnet sind um möglichst geringe Deckungsgleichheit -in Projektion in radialer Richtung - aufzuweisen.

8. Fahrzeugluftreifen nach einem oder mehreren der vorangehenden Ansprüche, **dadurch gekennzeichnet, dass** das Dichtmittel (8) ein Polyurethan-Gel ist.

9. Fahrzeugluftreifen nach einem oder mehreren der vorangehenden Ansprüche 1 bis 7, **dadurch gekennzeichnet, dass** das Dichtmittel (8) eine viskose Mischung auf Basis eines Butylkautschukes, eines Polybutens oder auf Basis von Silikon ist.

10. Fahrzeugluftreifen nach einem oder mehreren der Ansprüche 1 bis 4 ,
**dadurch gekennzeichnet, dass** bei Anordnung des Schallabsorbers(9) auf dem Dichtmittel (8), bei dem das Dichtmittel vorrangig die Funktion eines Klebers hat, die Schichtdicke (13) des Dichtmittels (8) 0,5 mm bis 2 mm, vorzugsweise etwa 1 mm beträgt.

11. Fahrzeugluftreifen nach einem oder mehreren der Ansprüche 1 bis 9 ,
**dadurch gekennzeichnet, dass** bei Anordnung des Dichtmittels (8) mit Schallabsorber (9) die Schichtdicke (13) des Dichtmittels (8) 2,5 mm bis 3,5 mm, vorzugsweise etwa 3 mm beträgt.

## Claims

1. Pneumatic vehicle tire comprising a self-sealing sealant (8) arranged in its interior, on the inner surface (7) opposite from the tread (1), the sealant (8) being highly viscous and the sealant (8) having such a tackiness that it adheres to the inner surface (7), **characterized in that**
the inner surface (7) on which the sealant (8) is arranged has regions (10) provided with an adhesion-reducing effect, these regions (10) provided with an adhesion-reducing effect taking up between 20% and 80% of the inner surface (7) on which the sealant (8) is arranged.

2. Pneumatic vehicle tire according to Claim 1, **characterized in that** the regions (10) provided with an adhesion-reducing effect are arranged evenly distributed over the circumference of the tire.

3. Pneumatic vehicle tire according to Claim 1 or 2, **characterized in that** the regions (10) provided with an adhesion-reducing effect have the structure of a network or grid or a strip structure or a geometrical 2-dimensional structure, such as comprising circles or polygons.

4. Pneumatic vehicle tire according to one or more of the preceding claims, **characterized in that** the regions (10) provided with an adhesion-reducing effect take up between 30% and 60%, preferably approximately 50%, of that inner surface on which the sealant (8) is arranged.

5. Pneumatic vehicle tire according to one or more of the preceding claims, **characterized in that** arranged on the sealant (8) in the radially inward direction is a sound absorber (9), which on account of the tackiness of the sealant (8) adheres to it.

6. Pneumatic vehicle tire according to Claim 5, **characterized in that** the contact surface (11) between the sound absorber (9) and the sealant (8) has regions (12) that are provided with an adhesion-reducing effect, these regions (12) provided with an adhesion-reducing effect taking up between 30% and 90% of the contact surface (11).

7. Pneumatic vehicle tire according to Claim 6, **characterized in that** the regions (12) provided with an adhesion-reducing effect of the contact surface (11) between the sound absorber (9) and the sealant (8) and between the inner surface (7) and the sealant (8) are arranged offset in relation to one another, in order to obtain as little congruence as possible - in projection in the radial direction.

8. Pneumatic vehicle tire according to one or more of the preceding claims, **characterized in that** the sealant (8) is a polyurethane gel.

9. Pneumatic vehicle tire according to one or more of the preceding Claims 1 to 7, **characterized in that** the sealant (8) is a viscous mixture based on a butyl rubber, a polybutene or based on silicone.

10. Pneumatic vehicle tire according to one or more of Claims 1 to 4, **characterized in that**, in the case of an arrangement of the sound absorber (9) on the sealant (8) in which the sealant primarily has the function of an adhesive, the layer thickness (13) of the sealant (8) is 0.5 mm to 2 mm, preferably approximately 1 mm.

11. Pneumatic vehicle tire according to one or more of Claims 1 to 9, **characterized in that**, in the case of an arrangement of the sealant (8) with a sound absorber (9), the layer thickness (13) of the sealant (8) is 2.5 mm to 3.5 mm, preferably approximately 3 mm.

## Revendications

1. Pneumatique de véhicule ayant un agent d'étanchéité (8) disposé dans son intérieur au niveau de la surface intérieure (7) opposée de la bande de roulement (1) et réalisant automatiquement une étanchéité, l'agent d'étanchéité (8) présentant un haut degré de viscosité et l'agent d'étanchéité (8) présentant un caractère collant tel qu'il adhère sur la surface intérieure (7) ;
**caractérisé en ce que** :
la surface intérieure (7) sur laquelle l'agent d'étanchéité (8) est disposé présente des zones (10) à réduction d'adhérence, ces zones (10) à réduction d'adhérence représentant entre 20 % et 80 % de la surface intérieure (7) sur laquelle l'agent d'étanchéité (8) est disposé.

2. Pneumatique de véhicule selon la revendication 1,
**caractérisé en ce que** les zones (10) à réduction d'adhérence sont disposées de façon uniformément répartie sur la périphérie du pneumatique.

3. Pneumatique de véhicule selon la revendication 1 ou 2, **caractérisé en ce que** les zones (10) à réduction d'adhérence présentent la structure d'un filet ou d'un grillage ou une structure en bande ou une structure géométrique en 2 dimensions, par exemple des cercles ou des polygones.

4. Pneumatique de véhicule selon l'une quelconque des revendications précédentes ou plusieurs d'entre elles,
**caractérisé en ce que** les zones (10) à réduction d'adhérence représentent entre 30 % et 60 %, de préférence approximativement 50 %, de la surface intérieure sur laquelle l'agent d'étanchéité (8) est disposé.

5. Pneumatique de véhicule selon l'une quelconque des revendications précédentes ou plusieurs d'entre elles,
**caractérisé en ce qu'**un réducteur de bruit (9) est disposé à l'intérieur dans le plan radial sur l'agent d'étanchéité (8) adhérant à lui du fait du caractère collant de l'agent d'étanchéité (8).

6. Pneumatique de véhicule selon la revendication 5,
**caractérisé en ce que** la surface de contact (11) présente, entre le réducteur de bruit (9) et l'agent d'étanchéité (8), des zones (12) à réduction d'adhérence, ces zones (12) à réduction d'adhérence occupant entre 30 % et 90 % de la surface de contact (11).

7. Pneumatique de véhicule selon la revendication 6,
**caractérisé en ce que** les zones (12) à réduction d'adhérence de la surface de contact (11) sont disposées de façon décalée les unes par rapport aux autres entre le réducteur de bruit (9) et l'agent d'étanchéité (8) et entre la surface intérieure (7) et l'agent d'étanchéité (8), pour présenter l'égalité de couverture la plus réduite possible - en projection dans la direction radiale.

8. Pneumatique de véhicule selon l'une quelconque des revendications précédentes ou plusieurs d'entre elles,
**caractérisé en ce que** l'agent d'étanchéité (8) est un gel de polyuréthane.

9. Pneumatique de véhicule selon l'une quelconque des revendications 1 à 7 ou plusieurs d'entre elles,
**caractérisé en ce que** l'agent d'étanchéité (8) est un mélange visqueux à base d'un caoutchouc de butyle, d'un polybutène ou à base de silicone.

10. Pneumatique de véhicule selon l'une quelconque des revendications 1 à 4 ou plusieurs d'entre elles,
**caractérisé en ce que** pour l'agencement du réducteur de bruit (9) sur l'agent d'étanchéité (8) dans lequel l'agent d'étanchéité prend en premier lieu la fonction d'une colle, l'épaisseur de couche (13) de l'agent d'étanchéité (8) est de 0,5 mm à 2 mm, de préférence d'approximativement 1 mm.

11. Pneumatique de véhicule selon l'une quelconque des revendications 1 à 9 ou plusieurs d'entre elles,
**caractérisé en ce que** pour l'agencement de l'agent d'étanchéité (8) avec réducteur de bruit (9), l'épaisseur de couche (13) de l'agent d'étanchéité (8) est de 2,5 mm à 3,5 mm, de préférence d'approximativement 3 mm.
